# EUROPÄISCHE PATENTANMELDUNG

(11) **EP 0 672 903 A1**
(43) Veröffentlichungstag der Anmeldung: **20.09.1995**
(21) Anmeldenummer: 95103391.9
(22) Anmeldetag: 09.03.1995
(51) Int. Cl.: G01N 25/18

(54) **Sensor zur Messung des spezifischen Wärmewiderstandes**

(30) Priorität: 16.03.1994 DE 4408836
(71) Anmelder: Felten & Guilleaume Energietechnik AG, D-51063 Köln (DE)
(72) Erfinder: Brakelmann, Heinrich, Prof. Dr. Ing., D-47495 Rheinberg (DE)

(57) **Zusammenfassung**

Die Erfindung betrifft einen Sensor zur Messung des spezifischen Wärmewiderstandes eines Mediums.

Der Sensor besteht aus einem Sensor-Lichtwellenleiter (**2**), der in einem Kabel (**1**) eingebracht ist, aus einer im Kabel integrierten Wärmequelle (**4**,**12**) oder Wärmesenke (Kühlelement), aus einer Ankoppeleinrichtung für eine Lichtquelle an einem Ende des Lichtwellenleiters (**2**) und aus einer Ankoppeleinrichtung für eine Meßeinrichtung für rückgestreutes Licht an mindestens einem Ende des Lichtwellenleiters (**2**).

Wärmequelle oder Wärmesenke erstreckt sich über die gesamte Länge des Lichtwellenleiters. Vorzugsweise kann die Wärmequelle ein elektrischer Widerstand sein, der gemeinsam mit dem Lichtwellenleiter verseilt ist. Andere als nichtelektrische Wärmequellen sind ebenfalls einsetzbar. Von Vorteil ist, wenn die Energiemenge dosierbar ist.

Das Meßverfahren umfaßt folgende Schritte:
Der Lichtwellenleiter wird mit Licht beaufschlagt.

Aktivieren der Wärmequelle oder der Wärmesenke.

Messung der Intensität des rückgestreuten Lichts während der thermischen Veränderung.

Der Meßwert wird aus dem zeitlichen Verlauf der Intensität des rückgestreuten Lichts gewonnen.

## Beschreibung

Die Erfindung betrifft einen Sensor zur Messung des spezifischen Wärmewiderstandes eines Mediums.

Es sind schon Meßsonden mit punktförmigen Temperaturfühlern beschrieben worden. Die DD 241 786-A1 offenbart ein Verfahren, bei dem während des Einsatzes die Meßsonde auf einen zu untersuchenden Probekörper gedrückt wird. Die durch den Wärmeübergang verursachte zeitliche Änderung der Sondentemperatur wird registriert und ausgewertet, woraus auf die spezifische Wärmekapazität oder die spezifische Wärmeleitfähigkeit geschlossen werden kann.

Ein Verfahren zur Messung der Wärmeleitfähigkeit von Gasen oder Flüssigkeiten wird in der CH-PS 491 375 vorgeschlagen. Ein in Intervallen mit Strom beaufschlagter Heizdraht wird von einem zu messenden Medium in einer Kammer umströmt. Während der stromfreien Zeitintervalle wird der Abkühlvorgang des Drahtes elektronisch gemessen und registriert.

Im US-Patent 4 703 175 ist eine mit Lichtwellenleitern arbeitende punktförmige Temperaturmeßsonde vorgeschlagen worden, die aus einem lichtabsorbierenden Halbleitermaterial besteht, welches bei Temperaturänderungen mit Veränderung einer bestimmten Lichtwellenlänge reagiert. Die Lichtwellenleiter dienen jeweils als Eingangs- bzw. Ausgangskanal für Licht der Meßwellenlänge.

Weiterhin ist eine Temperatur-Meßsonde zur Messung des spezifischen Wärmewiderstandes bekannt, die als Spieß ausgebildet ist und beispielsweise in Böden, landwirtschaftlichen Deponien, (Stroh, Heu, Rüben) oder Abfalldeponien etwa 0,5 m tief eingetrieben wird. Die Meßsonde besteht einerseits aus einem Heizelement, das während der Messung mit konstantem Strom betrieben wird und zu einer Erwärmung der Sonde führt und andererseits aus einem punktförmig arbeitenden Temperaturfühler, der ein entsprechendes Meßsignal erzeugt. Aus dem gemessenen Temperaturverlauf wird der spezifische Wärmewiderstand des Meßmediums bestimmt.

Die Anwendung solcher Meßsonden hat Nachteile. Die Messung kann nur punktuell an einer Stelle des Meßmediums erfolgen, bzw. es sind keine längenbezogenen Messungen eines ausgedehnten Objekts möglich. In der Regel sind solche Sonden auch nicht im Dauerbetrieb sondern nur jeweils relativ kurzzeitig einsetzbar. Ein Dauerbetrieb, bzw. ein Betrieb mit Fernbedienung oder -abfrage wäre wegen des nötigen Aufwandes für Heizstrom- und Datenübertragung unwirtschaftlich.

Es ist Aufgabe der Erfindung, das Meßprinzip auf Gegebenheiten auszudehnen, bei denen mit einem Sensor größere Flächen oder längere Strecken überwacht werden können und bei denen eine Fernbedienung und -auswertung mit geringem Aufwand möglich ist.

Die Aufgabe wird von dem Sensor gelöst, der in den nebengeordneten Ansprüchen 1 und 9 beschrieben ist. Vorteilhafte Ausgestaltungen werden in den Unteransprüchen angegeben.

Im Gegensatz zur bekannten Meßsonde kann sich die Wärmequelle über die gesamte Länge des Lichtwellenleiters im Sensor erstrecken. Vorzugsweise kann die Wärmequelle eine elektrische Energiequelle sein, beispielsweise ein elektrischer Widerstand, der gemeinsam mit dem Lichtwellenleiter verseilt ist. Andere als nichtelektrische Wärmequellen sind ebenfalls einsetzbar. Von Vorteil ist, wenn die Energiemenge dosierbar ist.

Der Sensor besteht in einer bevorzugten Ausführungsform aus einem elektrischen Widerstand (Leiter mit relativ geringem Querschnitt), der dem Lichtwellenleiter parallel angeordnet ist. Der elektrische Leiter führt während einer Meßperiode einen Strom; es werden thermische Verluste erzeugt, die die Umgebung des Sensors aufheizen. Während der Erwärmung wird aus Rückstreumessungen im Lichtwellenleiter der zeitliche Temperaturverlauf festgestellt. Mit Hilfe eines geeigneten Endgeräts sind für jeden Ort des Sensors und zu jeder Zeit Informationen über die thermische Situation in der unmittelbaren Umgebung des Sensors erzielbar.

Die Temperaturmessung mit Lichtwellenleiter durch Auswertung optischer Rückstreusignale erlaubt eine hohe Orts- und Zeitauflösung. Mit den erfindungsgemäßen Sensoren sind nicht nur kontinuierlich spezifische Wärmewiderstände des umgebenden Mediums meßbar sondern auch Temperaturen.

Entscheidend ist, daß der Sensor eine kleine Wärmekapazität hat. Der Aufbau sollte vorzugsweise so sein, daß der Durchmesser minimiert wird. Damit wird erreicht, daß schon geringe Wärmemengen für die Messung ausreichen. Die thermische Beeinflussung des Meßmediums sollte während der Messung klein bleiben. Da Erwärmungs- bzw. und Meßvorgang hinreichend kurzzeitig sind, ist der Meßwert gegenüber äußeren zeitvarianten Erwärmungen unabhängig.

In einer besonderen Ausgestaltung ist der elektrische Leiter als metallisches Rohr ausgebildet, in das der oder die Lichtwellenleiter eingelegt sind.

Für besonders lange Sensoren wird bezüglich Isolation, Abschirmung und Erdung das Meßkabel für Spannungen größer 1 kV und für elektrische Ströme größer 10 A ausgelegt.

Im Sensorkabel ist mindestens ein weiterer Lichtwellenleiter für Datenübertragungszwecke mitverseilt.

Ein alternativer Sensor wird ebenfalls vorgeschlagen. In ihm ist, im Gegensatz zum Sensor nach dem Anspruch 1 keine Wärmequelle sondern eine Wärmesenke integriert. Die Wärmesenke kann aus einem Kühlelement bestehen, womit der Umgebung Energie entnommen werden kann.

Zwei Einsatzgebiete des Sensors, an die vorzugsweise gedacht wird, sind die Messung und/oder die Überwachung des spezifischen Wärmewiderstandes des Untergrunds von Deponien oder des Materials der unmittelbaren Umgebung von Energiekabeln.

Daher sollen diese Anwendungsfälle näher erläutert werden.

Deponien können Wärme freisetzen, die zur Veränderung des Untergrunds führen. Mit solchen Veränderungen können sich Undichtigkeiten einstellen, die zum Durchtritt von Schadstoffen führen können. Sensoren nach der Erfindung können flächig (Mäanderform) in den Untergrund einer Deponie dauerhaft eingelegt werden. Mit ihnen ist eine thermische Überwachung auch über Jahre hinweg möglich.

Für die Belastbarkeit von Energiekabeln ist der spezifische Wärmewiderstand des umgebenden Bodens von entscheidender Bedeutung. Als Anwendungsfall in der Energietechnik wird daher vorgeschlagen, einen oder mehrere Sensoren parallel zu einem Energiekabel an geeigneten Stellen im Kabelgraben zu verlegen.

Die Messung kann nicht nur vor der Kabellegung einmalig erfolgen, sondern es kann auch im Betrieb des Energiekabels gemessen werden. Denn der Boden kann sich während des Betriebs nicht nur unter den schwankenden bodenklimatischen Bedingungen, sondern vor allem auch durch die vom Energiekabel hervorgerufene Erwärmung in seinen thermischen Eigenschaften stark verändern und im Extremfall austrocknen. Dies führt zu erheblichen Einschränkungen der Kabelbelastbarkeit.

Der erfindungsgemäße Sensor ermöglicht die Ausnutzung der thermischen Reserven der Kabelsysteme bei gleichzeitig großer Betriebssicherheit. Bei zwangsgekühlten Kabelsystemen würde sie verläßliche Entscheidungen darüber sicherstellen, zu welchen Zeiten das Kühlsystem in Betrieb genommen werden muß.

Das Meßverfahren wird zum Schluß detailliert abgehandelt.

Die Erfindung wird in einer bevorzugten Ausführungsform in zwei Figuren näher beschrieben.
- **Fig.** 1: zeigt einen Sensor als Stufenmodell und
- **Fig.** 2: zeigt ein Meßkabel mit halbleitendem Heizleiter.

In einem metallischen Schutzrohr 4 liegen mehrere Lichtwellenleiter 2,2'. Das Schutzrohr 4 kann mit einem thixotropen Gel gefüllt sein. Das Schutzrohr fungiert als elektrischer Leiter (Heizleiter). Der Querschnitt des Schutzrohrs ist so gewählt, daß ein etwas erhöhter elektrischer Widerstand vorliegt. Vorzugsweise kann der Widerstand einem Widerstand eines Kupferleiters mit 4 mm² entsprechen. Mindestens ein Lichtwellenleiter 2 wird zur thermischen Messung verwendet und mindestens ein weiterer 2' kann zur optischen Datenübertragung verwendet werden.

An einem oder an beiden Enden des Sensors 1 ist eine Ankoppeleinrichtung für eine Lichtquelle (Laser) angeordnet. Weiterhin ist eine Ankoppeleinrichtung für eine Meßeinrichtung für das rückgestreutes Licht an mindestens einem Ende des Lichtwellenleiters vorgesehen. Falls Datenübertragung über Lichtwellenleiter vorgesehen wird, werden entsprechende Übertragungsgeräte an die beiden Enden angeschlossen.

Die elektrische Spannung, die zur Beheizung der Sonde benötigt wird, bestimmt sich nach der Länge des Sensors 1. Für die Überwachung von Deponien oder Kabeltrassen können durchaus Längen bis zu 5 km wünschenswert werden. Der Sensor sollte daher für große Längen bezüglich Abschirmung, Erdung und Isolation als Niederspannungskabel ausgeführt sein. Solche Kabelauslegungen liegen im Rahmen des Bekannten. Beispielsweise würde ein Sensor für Spannungen über 1 kV, welcher einige 10 A Strom tragen muß, eine 4 mm dicke VPE-Isolation 7 haben. Auf der VPE-Isolation 7 ist eine Leitschicht 8 angebracht.

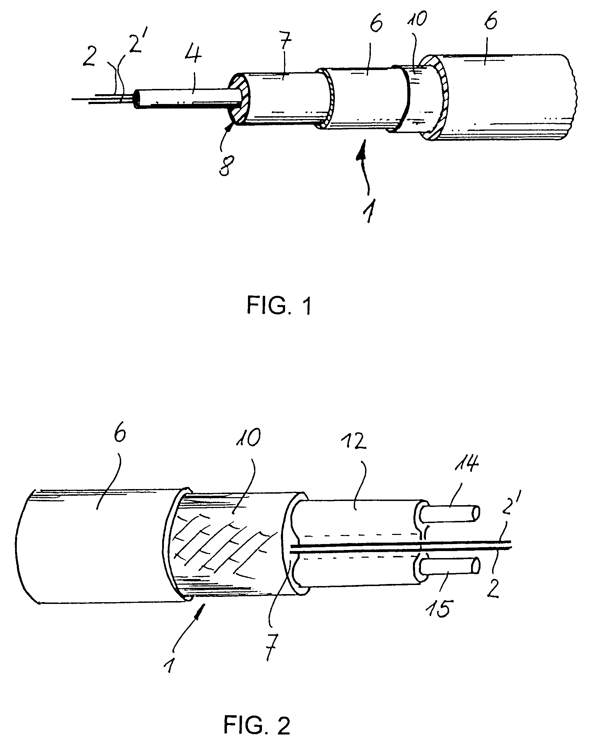

Als elektrischer Rückleiter kann entweder ein zweiter Draht oder die metallische Abschirmschicht 10 im Mantel 6 des Sensors dienen. Der Rückleiter kann entweder als Heizleiter oder als Kaltleiter (also mit geringem elektrischen Widerstand) ausgebildet sein. Der elektrische Leiter kann auch als Doppelader ausgebildet sein. In diesem Fall müssen die Lichtwellenleiter nicht in einem Rohr untergebracht werden. Der elektrische Rückleiter 10 kann als Bandwickel oder als Geflecht aus Cu oder Al mit einem elektrischen Widerstand entsprechend etwa 4 mm² Cu ausgebildet sein. Da der Sensor über längere Zeit eingegraben werden soll, wird der Kabelmantel 6 mit einem in **Fig.** 1 nicht näher herausgehobenem Feuchtigkeits- und/oder Korrosionsschutz versehen. Die Spannungsversorgung kann aus einem Transformator bestehen, an dessen Sekundärwicklung der Leiter 4 und der Rückleiter 10 liegen. Am fernen Ende des Sensors werden Leiter und Rückleiter verbunden. Diese Verbindung kann geerdet werden. Das Potential der Sekundärwicklung bleibt schwebend.

Der Sensor kann auch ohne Rückleiter 10 ausgebildet sein. Hierzu ist allerdings Bedingung, daß der Heizstrom über einen anderen Leiter zurückgeführt wird.

Nach **Fig.** 2 ist der Heizleiter 12 aus Material mit halbleitender Eigenschaft, beispielsweise Ruß in Kunststoff, ausgebildet. In dieser Meßkabel-Ausführung sind zwei Elektroden 14,15 (als Kaltleiter) mitverseilt, zwischen denen im halbleitenden Material die Heizspannung ausgebildet wird. Solche Heizkörper sind beispielsweise aus der DE 23 64 947-A1 oder US 4 200 973 bekannt.

Der Meßvorgang ist relativ kurz. Er kann innerhalb von 10 bis 100 sec abgeschlossen werden.

Das Verfahren zur Messung des spezifischen Wärmewiderstandes umfaßt folgende ansich schon bei Stabsonden bekannte und benutzte Verfahrensschritte:
- Der Lichtwellenleiter wird mit Licht beaufschlagt.
- Die Wärmequelle oder die Wärmesenke wird aktiviert.
- Während der Aufheizung oder der Abkühlung wird die Intensität des rückgestreuten Lichts gemessen.
- Der Meßwert für den spezifischen Wärmewiderstandes des das Kabel umgebenden Mediums wird aus dem zeitlichen Verlauf der Intensität des rückgestreuten Lichts gewonnen.

Die Messung findet statt, während der Sensor seine Umgebung thermisch verändert. Vorzugsweise wird während der Temperaturänderung aus optischen Rückstreumessungen im Lichtwellenleiter der zeitliche Temperaturverlauf festgestellt. Es können aus der Aufheiz- oder aus der Abkühlungskurve die gewünschten thermische Werte des Meßmediumns entnommen werden. Die Abkühlung kann durch Aktivierung des erfindungsgemäßen Kühlelements erreicht werden oder man kann die Abkühlphase nach der Aufheizung heranziehen. Die entsprechenden optischen Auswerte- und -meßverfahren sind bekannt. Beispielsweise können Raman-Rückstreumessungen mittels OTDR (optical time domain reflectometry) vorgenommen werden. Neuere einsetzbare Verfahren werden in J Lightwave Techn (1993) 11, 1377-1384 beschrieben.

Mit Hilfe eines Computers mit Auswerteprogramm wird für jeden Ort des Sensors und zu jeder Zeit die thermische Situation in der unmittelbaren Umgebung des Sensors ausgewertet. In einfachen Fällen ergibt sich bei der Erwärmung bei zeitlich logarithmischer Auftragung eine Gerade. Die Steigung dieser Geraden entspricht über einen konstruktionsabhängigen Umrechnungsfaktor dem spezifischen Wärmewiderstand der Umgebung.

## Patentansprüche

1. Sensor zur Messung des spezifischen Wärmewiderstandes eines Mediums, bestehend
- aus einem Lichtwellenleiter (**2**), der als Sensorelement in einem Kabel (**1**) eingebracht ist,
- aus einer im Kabel integrierten Wärmequelle (**4**,**12**),
- aus einer Ankoppeleinrichtung für eine Lichtquelle an einem Ende des Lichtwellenleiters (**2**) und
- aus einer Ankoppeleinrichtung für eine Meßeinrichtung für rückgestreutes Licht an mindestens einem Ende des Lichtwellenleiters (**2**).

2. Sensor nach Anspruch 1, **dadurch gekennzeichnet**, daß sich die Wärmequelle (**4**,**12**) über die gesamte Länge des Lichtwellenleiters (**2**) im Kabel (**1**) erstreckt.

3. Sensor nach Anspruch 2, **dadurch gekennzeichnet**, daß die Wärmequelle (**4**,**12**) aus einem elektrischen Heizleiter besteht.

4. Sensor nach Anspruch 3, **dadurch gekennzeichnet**, daß der elektrische Heizleiter (**4**,**12**) gemeinsam mit dem Lichtwellenleiter (**2**) verseilt ist.

5. Sensor nach einem der vorhergehenden Ansprüche 2 bis 4, **dadurch gekennzeichnet**, daß der Heizleiter (**4**,**12**) ein Teil einer Doppelader ist.

6. Sensor nach einem der vorhergehenden Ansprüche 2 bis 5, **dadurch gekennzeichnet**, daß der Heizleiter (**4**) als metallisches Rohr ausgebildet ist, in das die Lichtwellenleiter (**2**) eingelegt sind.

7. Sensor nach einem der vorhergehenden Ansprüche 2 bis 4, **dadurch gekennzeichnet**, daß der Heizleiter (**4**,**12**) aus Material mit halbleitender Eigenschaft besteht und daß im Kabel (**1**) mindestens zwei Elektroden (**14**,**15**) mitverseilt sind.

8. Sensor nach einem der vorhergehenden Ansprüche, **dadurch gekennzeichnet**, daß der Sensor (**1**) als Kabel für Spannungen größer 1 kV und für elektrische Ströme größer 10 A ausgelegt ist.

9. Sensor zur Messung des spezifischen Wärmewiderstandes eines Mediums, bestehend
- aus einem Lichtwellenleiter (**2**), der als Sensorelement in einem Kabel (**1**) eingebracht ist,
- aus einer im Kabel integrierten Wärmesenke,
- aus einer Ankoppeleinrichtung für eine Lichtquelle an einem Ende des Lichtwellenleiters (**2**) und
- aus einer Ankoppeleinrichtung für eine Meßeinrichtung für rückgestreutes Licht an mindestens einem Ende des Lichtwellenleiters (**2**).

10. Sensor nach einem der vorhergehenden Ansprüche, **dadurch gekennzeichnet**, daß der Mantel (**6**) des Sensorkabels (**1**) als Feuchtigkeits- und/oder Korrosionsschutz ausgebildet ist.

11. Sensor nach einem der vorhergehenden Ansprüche, **dadurch gekennzeichnet**, daß im Sensorkabel (**1**) mindestens ein weiterer Lichtwellenleiter (**2'**) für die Datenübertragung mitverseilt ist.

12. **Verwendung** eines Sensors nach einem der vorhergehenden Ansprüche für die Überwachung des spezifischen Wärmewiderstandes von Materialien der unmittelbaren Umgebung des Sensors (**1**).

13. **Verfahren** zur Messung des spezifischen Wärmewiderstandes mit einem Sensor nach einem der vorhergehenden Ansprüche, **dadurch gekennzeichnet**,
- daß der Lichtwellenleiter (**2**) mit Licht beaufschlagt wird,
- daß die Wärmequelle, bzw. die Wärmesenke des Sensorkabels (**1**) aktiviert wird,
- daß während der Aufheizung oder der Abkühlung die Intensität des rückgestreuten Lichts gemessen wird,
- und daß der Meßwert für den spezifischen Wärmewiderstand des das Sensorkabel (**1**) umgebenden Mediums aus dem zeitlichen Verlauf der Intensität des rückgestreuten Lichts gewonnen wird.

14. Verfahren zur Messung des spezifischen Wärmewiderstandes nach Anspruch 13, **gekennzeichnet dadurch**, daß der Meßwert aus der Intensität der optischen Rückstreuung ermittelt wird.
